# EUROPEAN PATENT APPLICATION

(11) **EP 0 774 344 A2**
(43) Date of publication of application: **21.05.1997**
(21) Application number: 96307260.8
(22) Date of filing: 03.10.1996
(51) Int. Cl.: B32B 7/08, B32B 5/24, A47C 27/12

(54) **Composite material**

(30) Priority: 03.10.1995 GB 9520135
(71) Applicant: Flaxall Products Limited, Carrickfergus, County Antrim (GB)
(72) Inventor: Coburn, Robert, Lisburn, County Antrim, BT27 5TX (GB)
(74) Representative: Low, Peter John

(57) **Abstract**

A composite interlining material for use in upholstered articles such as furniture comprise a flexible, heat reflective metal foil 12 sandwiched between textile material webs 10. The assembly is held together by stitches 14.

## Description

This invention relates to a composite material and more particularly, but not exclusively, a composite interlining material for use in upholstery, bedding, cushions or clothing outerwear, etc.

In order to meet the current requirements if the outer fabric of upholstered furniture, cushions and the like is not treated for fire retardancy, a fire retardant, interliner must be provided between the outer fabric and the upholstery. The present attempts to meet this requirement is to treat the interliner material, which is usually a textile fabric, with a fire retardant composition. To date this has not been very satisfactory and it has been found difficult in many cases to meet the relevant standard as provided in B.S.5852.

The present invention has been made in order to deal with this problem.

According to the invention there is provided a composite material comprising a sheet of flexible heat reflective material sandwiched between webs of textile material, the layers of the composite material being held together.

In a preferred embodiment of the invention the heat reflective material is a metal foil sandwiched between two webs of textile material.

The textile material may be woven, knitted or non-woven and can comprise natural fibre, synthetic fibre or blends thereof.

The layers of the composite material are preferably held together by stitch bonding, but other ways can be adopted, such as adhesive.

Although it is preferred that the composite material should consist of three layers, that is to say a metal foil sandwiched between two webs of textile fabric, the composite material can include additional layers of metal foil and/or textile material preferably arranged alternately and preferably arranged such that the outer layers are textile material. Thus, for example, a composite material may have seven layers comprising four textile material layers and three metal foil layers, a layer of metal foil being disposed between each pair of adjacent textile layers.

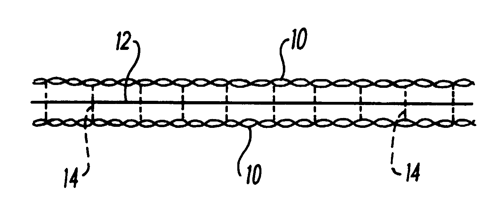

A specific embodiment of the invention will now be described by way of example with reference to the accompanying drawing which is a diagrammatic section through a composite material.

Referring to the drawing a composite material comprises two webs 10 of non-woven textile material formed from blended wool fibre and polyester yarn. Sandwiched between the webs 10 is a flexible metal foil 12, for example of aluminium typically of from 7 to 20 microns thickness. The layers are held together by stitchbonding, preferably by parallel spaced apart lines of stitches 14. The resultant composite material has sufficient strength to maintain its integrity whilst it is placed in position as an interliner in upholstery and while the upholstered article is in use. Upholstered articles with the composite of the invention as an interliner meet the requirements of B.S.5852 without difficulty.

A sample of the composite material of the invention as described above was tested in accordance with the following procedures:
S.I.1324:1988 Furniture and Furnishings (Fire)(Safety) Regulations Schedule 3 - Ignition resistance test for interliner.
B.S.5852:1982 Part 2 Ignition by flaming sources (Source 5 - Crib)
   B.S.5651:1978 Cleansing and Wetting Procedures for fabrics prior to Flammability testing.
   Para 4 - water soak

The sample was found to meet the requirements of these tests.

The invention is not restricted to the above described specific embodiment and many variations and modifications can be made. In addition the invention is not restricted to use as an interliner.

## Claims

1. A composite interlining material characterised in that it comprises a sheet of flexible heat reflective material sandwiched between webs of textile material, the layers of the composite material being held together.

2. A composite interlining material as claimed in Claim 1, wherein the flexible heat reflective material is a metal foil.

3. A composite interlining material as claimed in Claim 2, wherein the metal foil is aluminium.

4. A composite interlining material as claimed in Claim 2 or Claim 3, wherein the foil has a thickness of from 7 to 20 microns.

5. A composite interlining material as claimed in any preceding claim, wherein the layers are held together by stitch bonding.

6. A composite interlining material as claimed in any preceding claim, wherein a plurality of sheets of flexible heat reflective material are provided.

7. A composite interlining material as claimed in Claim 6, wherein each sheet of flexible heat reflective material is sandwiched between webs of textile material.

8. An upholstered article having a composite interlining material as claimed in any preceding claim.
